# EUROPEAN PATENT SPECIFICATION

(11) **EP 3 480 360 B1**
(45) Date of publication and mention of the grant of the patent: **05.08.2020**
(21) Application number: 18201239.3
(22) Date of filing: 18.10.2018
(51) Int. Cl.: E01C 7/32, E01C 11/22, E01C 7/18, E03F 1/00

(54) **ROAD SURFACE COMPRISING ONE OR MORE POROUS STRIPS**
FAHRBAHNOBERFLÄCHE MIT EINEM ODER MEHREREN PORÖSEN STREIFEN
REVÊTEMENT ROUTIER COMPRENANT UNE OU PLUSIEURS BANDES POREUSES

(30) Priority: 06.11.2017 BE 201705794
(43) Date of publication of application: 08.05.2019
(73) Proprietor: Willemen Groep NV, 2800 Mechelen (BE)
(72) Inventor: Vancompernolle, Inge, 9800 Deinze (BE); Vancompernolle, Els, 9000 Gent (BE); Van Damme, Emmanuel, 9041 Oostakker (BE)
(74) Representative: IP HILLS NV

(56) References cited:
- EP-A1- 0 381 903
- FR-A1- 2 688 808
- JP-A- 2006 028 828

## Description

The invention relates to a road surface and a method for disposing it. More specifically a road surface comprising one or more porous strips that allow water to seep through the road surface into the ground.

### STATE OF THE ART

The need for a high-quality and sustainable solution for water falling on a road surface is increasing. In particular for a road surface with a large surface area, such as allotments, port sites, roads, parking lots, shopping centers, storage depots etc., or in an environment of which the percentage of surfaced area is large, the problems with handling rainwater are increasing. On the one hand rainwater is drained off via drainage elements such as sewer systems and drainage channels, and when this happens to quickly it may cause floods during precipitation peaks. On the other hand, drainage of the fallen rainwater means that groundwater is not or hardly replenished in the region of the road surface, having a negative impact on the groundwater reserves, which may cause problems in the supply of water, in particular in periods of prolonged drought. Therefore, it is often required when constructing such a road surface that in addition a sufficiently large area that is not surfaced is also provided to allow a minimum of rainwater-infiltration into the ground. In addition, when constructing such a road surface it is also often required to provide a buffer installation having sufficient capacity to deal with precipitation peaks. Such objects reduce the usable surface area of the road surface itself and increase the cost and complexity of constructing such a road surface.

A road surface with porous strips allowing the water to seep through the road surface into the ground underneath the road surface, is for instance known from GB2404213. This document describes an embodiment having a porous strip with an upper layer having a thickness of for instance 25mm of porous asphalt concrete consisting of a mixture of bitumen and aggregate of which all parts can pass through a 14mm-sieve, preferably through a 6mm-sieve. However, it turned out that such an upper layer consisting of such a known type of porous asphalt concrete is prone to pollution clogging it up. As a result, water sufficiently seeping through to the underlying layers of the road surface cannot be guaranteed in the long term. G2404213 furthermore describes that below said porous upper layer, two further layers of porous asphalt concrete are disposed as supporting structure. The uppermost of those two layers comprises a porous asphalt concrete layer having a thickness of preferably 60mm consisting of a mixture of bitumen and aggregate of which all parts can pass through a sieve, preferably a 28mm-sieve. The lowermost of those two layers comprises a porous asphalt concrete layer having a thickness of preferably 70mm consisting of a mixture of bitumen and aggregate of which all parts can pass through a 40mm-sieve. It turned out that constructing a road surface using these three different types of porous asphalt concrete requires a complex operation and coordination, giving rise to an increased risk of errors when disposing the road surface. Underneath the three different layers of porous asphalt concrete a semipermeable membrane is disposed and underneath it a porous foundation having a thickness of preferably 295mm that is provided with a drainage element for draining off water from the foundation to a location beyond the boundary of the road surface. The foundation consists of aggregate of which the parts preferably can pass through a 300mm-sieve. It is clear that such a road surface having several layers of different types of porous asphalt concrete is considered necessary to resist heavier loads, such as for instance exerted by vehicles moving over the road surface. As stated on page 15 of GB2404213, one embodiment with an upper layer having a thickness of for instance 40mm to 80mm of porous asphalt concrete that is disposed directly onto the foundation is only considered suitable for light loads such as for instance exerted by pedestrians. As described above, such an upper layer of porous asphalt concrete consisting of a mixture of bitumen and aggregate of which all parts can pass through a 14mm-sieve, preferably through a 6mm-sieve, is prone to clogging up due to pollution.

EP-A-381903 discloses a road surface comprising a porous upper layer consisting of a porous asphalt concrete layer comprising a mixture of bitumen and aggregate, a porosity of 20%, and a water-permeable, non-bonded foundation.

Therefore, the need remains for a road surface that can easily and efficiently be disposed and that improves seeping in of water into the ground, in order to realize a reduced impact on the groundwater level. Furthermore, there is a need for a road surface that is capable of making optimal use of the available surface area for surfacing and reducing the surface area claimed by drainage elements and/or buffer elements.

### SUMMARY

According to first aspect of the invention a road surface is provided, comprising one or more porous strips comprising:
- a porous upper layer consisting of a porous asphalt concrete layer comprising:
   - a mixture of bitumen and aggregate, the aggregate comprising a fraction of 65% or more that cannot pass through a 14mm-sieve and a fraction of 90% or more that can indeed pass through a 32mm-sieve;
   - a porosity in the range of 27% up to and including 35%; and
   - a thickness in the range of 18cm up to and including 25cm; and
- a water-permeable, non-bonded foundation positioned between the porous upper layer and the ground, in order for water to seep into the ground, the foundation comprising a thickness in the range of 12cm or larger.

That way, a road surface is realized that can be disposed in a simple manner and that allows the water fallen on the upper surface to seep through the porous strips of the road surface into the ground. The need for providing drainage elements in or at the road surface is thus reduced. The risk of affecting the groundwater level due to excessive drainage of rainwater, in particular in a region having a large surfaced area, is thus reduced. In addition, the porous strip provides a buffer capacity for fallen water as a result of which the need for separate buffer elements is reduced. The specific structure of the porous asphalt concrete of the porous strip furthermore ensures that the risk of the porous strip clogging up due to pollution is reduced, so that also in the long term, the buffer capacity and the infiltration capacity of the porous strip remains guaranteed. Finally, the relatively thick upper layer of porous asphalt concrete also allows the exerted load to be distributed better over the non-bonded, water-permeable foundation disposed underneath it, as a result of which the thickness of this foundation can be reduced. This is advantageous in terms of use of materials and ensures an efficient construction of the road surface with a minimum impact on the soil. Furthermore, it is clear that the porous strips of the road surface are configured such that they allow water fallen on the upper surface of the porous strip of the road surface to seep through all layers of the porous strip to the ground. It is also clear that the porous upper layer of the road surface consists of a homogeneous porous asphalt concrete layer, that means a layer of a porous asphalt concrete having the same mixture of bitumen and aggregate, and the same porosity. It is also clear that the term asphalt concrete and asphalt concrete layer have to be interpreted in a broad sense, as any suitable mixture of bitumen and aggregate, which is also often referred to as an asphalt layer, tarmac, bitumen macadam, a bituminous mixture, asphalt paving, ..., generally referring to a mixture wherein aggregate is bonded with bitumen as binding agent. Therefore, it is clear that the term asphalt concrete may also refer to bituminous asphalt mixtures as known to the skilled person under the terms of highly pervious asphalt, referred to in Dutch as "Zeer Open Asfalt" or ZOA, highly pervious asphalt concrete, referred to in Dutch as "Zeer Open Asfalt-Beton" or ZOAB, stone mastic asphalt or SMA, etc. Furthermore, it is clear that concrete in the term asphalt concrete as used in this application, does not refer to the use of cement or mortar in the mixture. Furthermore, it is clear that aggregate must also be interpreted as any suitable aggregate to be used in an asphalt concrete layer, such as for instance any suitable mineral and/or artificial aggregate such as crushed stone chips, gravel, etc. It is also clear that the porous strips of the road surface allow the water to seep through the road surface into the ground situated underneath the road surface. That means, preferably without making use of further drainage elements and/or buffer elements that drain off the fallen water from the road surface and prevent water from seeping into the ground located underneath the road surface itself. Furthermore, it is clear that the indicated percentages of the fractions are mass percentages.

According to one embodiment a road surface is provided, wherein the porous upper layer comprises a buffer capacity of 280l/m³ or more.

That way the porous strips of the road surface itself act as buffer elements for fallen water, as a result of which the need for additional buffer elements is reduced. That way the road surface itself can make maximum use of the available surface area, as no extra surface area needs to be kept available for drainage elements or buffer elements. This is particularly advantageous in a densely built environment and/or an environment having a surface area of which a large percentage is surfaced.

According to another embodiment a road surface is provided, wherein the porous strips comprise a buffer capacity of 300l/m³ or more.

Such a buffer capacity often allows for dispensing with additional buffer elements altogether.

According to another embodiment a road surface is provided, wherein:
- the aggregate of the porous asphalt concrete layer comprises a fraction of 50% or more that cannot pass through a 20mm-sieve and a fraction of 90% or more that can indeed pass through a 32mm-sieve; and
- a porosity of 28% +/- 1%.

That way a road surface is realized capable of realizing a sufficiently large buffer capacity in an optimal way, and of providing sufficient resistance to the openings clogging up due to pollution and to raveling, and of which the openings remain sufficiently small as to obtain a walkable upper surface. It is clear that the porosity can be determined in a way known to the skilled person, for instance as indicated in the NBN EN 12697-6 standard, procedure D.

According to another embodiment a road surface is provided, wherein the bitumen of the porous asphalt concrete layer comprises one or more of the following:
- polymer bitumen;
- fiber-enriched bitumen.

That way the resistance to raveling is increased.

According to one embodiment the porous asphalt concrete layer comprises a mixture of bitumen and aggregate, wherein the mixture comprises a fraction in the range of 2% up to and including 5% of bitumen, for instance a fraction of 3% of bitumen.

According to another embodiment a road surface is provided wherein the porous asphalt concrete layer comprises no cement or concrete.

It is clear that concrete in the term asphalt concrete, as used in this application, does not refer to the use of cement or mortar in the mixture.

According to another embodiment a road surface is provided, wherein the porous upper layer comprises a thickness of 20cm +/- 1cm.

That way a sufficiently large buffer capacity is realized, and the load distribution is sufficiently spread over the foundation by a porous upper layer of such a thickness, as a result of which the thickness of the foundation can be reduced.

According to another embodiment a road surface is provided, wherein the foundation is loose aggregate and/or the thickness of the foundation is 15cm +/- 1cm.

Such a relatively thin foundation layer is possible due to the advantageous distribution of the loads exerted on the porous upper layer, and therefore causes an efficient use of material and reduces the overall thickness of the road surface, and as a consequence also the related impact on the soil.

According to a next embodiment a road surface is provided, wherein the road surface furthermore comprises one or more impermeable strips adjacent to at least one of the porous strips, the impermeable strips comprising:
- an impermeable upper layer consisting of an impervious asphalt concrete layer;
- a porous intermediate layer, positioned underneath the impermeable upper layer, and consisting of a porous asphalt concrete layer comprising:
   - a mixture of bitumen and aggregate, the aggregate comprising a fraction of 65% or more that cannot pass through a 14mm-sieve and a fraction of 90% or more that can indeed pass through a 32mm-sieve;
   - a porosity in the range of 27% up to and including 35%; and
   - a thickness in the range of 16cm up to and including 23cm; and
- a water-permeable, non-bonded foundation positioned between the porous intermediate layer and the ground, in order for water to seep into the ground, the foundation comprising a thickness in the range of 12cm or larger.

In that way a road surface can be realized, wherein, for instance on parts of the road surface that are exposed to larger torsion loads, impermeable strips are disposed which by means of impervious asphalt concrete as upper layer are better able to resist such torsion loads with a more limited risk of raveling. The porous intermediate layer of the impermeable strip also contributes to the buffer capacity of the road surface and remains accessible to water that may seep into the road surface to the ground via an adjacent porous strip. Similar to what is described above regarding the porous upper layer of a porous strip, the porous asphalt concrete layer of the porous intermediate layer is configured advantageously, so that it can also sufficiently resist pollution resulting in the buffer capacity and the capacity to allow water to seep to the ground also remaining available in the long term.

According to another embodiment a road surface is provided, wherein the mixture of bitumen and aggregate of the porous asphalt concrete layer of the porous intermediate layer of the one or more impermeable strips corresponds to that of the porous asphalt concrete layer of the porous upper layer of the one or more porous strips.

That way a road surface can be efficiently constructed, wherein for constructing the porous and impermeable strips the same foundation and porous asphalt concrete can be used, which simplifies the supply of the material during disposing the road surface. For the porous strips, the upper impermeable layer including impervious asphalt can then easily be disposed in order for the thickness to correspond to that of the adjacent porous strips.

According to another embodiment a road surface is provided, wherein the impervious asphalt concrete layer consists of:
- an impervious asphalt concrete type 4 according to standard specifications SB250 version 3.1;
- an impervious asphalt concrete type AB-4C according to standard specifications SB250 version 3.1; or
- an impervious asphalt concrete consisting of a mixture comprising a bitumen content of 5.9% +/- 0.5% and aggregate of which a fraction of 95% or more can pass through a 16mm-sieve.

Such a type of impervious asphalt concrete is suitable as upper layer for zones of the road surface that are exposed to larger torsion load. In addition, this type of impervious asphalt concrete is suitable to be disposed on the porous asphalt concrete of the porous intermediate layer in order for a proper adhesion to be obtained and without the risk of the impervious upper layer seeping into the porous intermediate layer too deeply. The specifications as defined in the standard specification SB250 version 3.1 are known to the skilled person and available at https://wegenenverkeer.be/standaardbestek-250-versie-31.

According to another embodiment a road surface is provided, wherein:
- the sum of the thickness of the impermeable upper layer and the thickness of the porous intermediate layer of the impermeable strip is equal to the thickness of the porous upper layer of the adjacent porous strip; and/or
- the thickness of the impermeable upper layer of the impermeable strip is larger than or equal to 4cm;
- the thickness of the porous intermediate layer of the impermeable strip is larger than or equal to 16cm; and/or
- the thickness of the porous upper layer of the adjacent porous strip is larger than or equal to 20cm.

Such thicknesses of the road surface layers are optimal in terms of the type of asphalt used, the buffer capacity, resistance to loads, the use of materials, the efficient disposal using known equipment, etc.

According to another embodiment a road surface is provided, wherein the one or more impermeable strips at least partially comprise a gradient in the direction of an adjacent porous strip.

That way the water fallen on the impermeable strips is optimally drained off to an adjacent porous strip where it can seep into the road surface in order to, optionally after being buffered, seep into the ground at that location.

According to another embodiment a road surface is provided, wherein the road surface further comprises one or more paving strips, wherein the paving strips comprise:
- an upper paving layer comprising:
   - an upper paving comprising paving bricks and joint filling disposed between the paving bricks;
   - a layer to be paved disposed underneath the paving;
   - a geotextile disposed underneath the layer to be paved; and
- a porous intermediate layer, positioned underneath the upper paving layer, consisting of a porous asphalt concrete layer comprising:
   - a mixture of bitumen and aggregate, the aggregate comprising a fraction of 65% or more that cannot pass through a 14mm-sieve and a fraction of 90% or more that can indeed pass through a 32mm-sieve;
   - a porosity in the range of 27% up to and including 35%; and
   - a thickness in the range of 10cm up to and including 20cm; and
- a water-permeable, non-bonded foundation positioned between the porous intermediate layer and the ground, in order for water to seep into the ground, the foundation comprising a thickness in the range of 12cm or larger.

That way strips including paving can also be provided which by means of the porous intermediate layer have a larger buffer capacity than a known road surface including paving. According to one aspect of the invention, a road surface having one or more of such paving strips can also be provided, that means without the necessity of comprising additional impermeable strips or porous strips.

According to one embodiment a road surface is provided, wherein the porous intermediate layer comprises a buffer capacity of 280l/m³ or more.

According to another embodiment a road surface is provided, wherein the porous intermediate layer comprises a buffer capacity of 300l/m³ or more.

According to another aspect of the invention a method is provided for the construction of a road surface according to one or more of the preceding claims, wherein the method comprises the following steps for disposing the one or more porous strips of the road surface:
- disposing the foundation;
- disposing the porous upper layer on top of the foundation.

That way the advantageous porous strips of the road surface with their advantageous properties in terms of buffer capacity, water seeping into the ground underneath the road surface, pollution-resistance, etc. can easily and efficiently be disposed, using the known means for constructing a road surface having an asphalt concrete layer.

According to one embodiment a method is provided, wherein the porous upper layer is disposed in two layers disposed on top of one another.

Disposing the porous upper layer in two layers that are disposed on top of one another and consist of the same porous asphalt concrete, ensures that the layer thickness of each of the two layers of which the porous upper layer consists is optimal in terms of the used mixture of bitumen and aggregate, and more specifically the grain-size distribution of the aggregate of the mixture.

According to another embodiment a method is provided, wherein each of the two layers of the porous upper layer comprises a thickness of 9cm or larger.

Such a thickness corresponds optimally to the grain-size distribution of the aggregate of the mixture of porous asphalt concrete of the porous upper layer.

According to another embodiment a method is provided, wherein the method comprises the following steps for disposing the one or more impermeable strips of the road surface:
- disposing the foundation;
- disposing the porous intermediate layer on top of the foundation;
- disposing the impermeable upper layer on the porous intermediate layer.

That way the advantageous impermeable strips can be disposed in an easy and efficient fashion using known means for disposing a road surface comprising an asphalt concrete layer.

According to another embodiment a method is provided, wherein:
- the porous intermediate layer is disposed in two layers situated above one another; and/or
- the impermeable upper layer is disposed in two layers situated above one another.

Disposing the porous intermediate layer and/or the impermeable upper layer in two layers that are disposed above one another and consist of the same porous asphalt concrete, ensures that the layer thickness of each of the two layers of which the porous intermediate layer and/or the impermeable upper layer consists is optimal in terms of the used mixture of bitumen and aggregate, and more specifically the grain-size distribution of the aggregate of the mixture.

According to another embodiment a method is provided, wherein:
- each of the two layers of the porous intermediate layer comprises a thickness of at least 7cm; and/or
- each of the two layers of the impermeable upper layer comprises a thickness of at least 1.5cm.

Such a thickness corresponds optimally with the grain-size distribution of the aggregate of the mixture of porous asphalt concrete of the porous intermediate layer and the impermeable upper layer, respectively.

According to another embodiment a method is provided, wherein the impermeable strips are disposed in the zones of the road surface that are exposed to the largest torsion.

According to another embodiment or aspect of the invention a method is provided which comprises the following steps for disposing the one or more paving strips of the road surface:
- disposing the foundation;
- disposing the porous intermediate layer on top of the foundation;
- disposing the upper paving layer on top of the porous intermediate layer, by means of disposing:
   - the geotextile on top of the porous intermediate layer;
   - the layer to be paved on top of the geotextile;
   - the upper paving on top of the layer to be paved.

### DESCRIPTION

The invention will now be described in more detail on the basis of the exemplary embodiments shown in the figures:
- Figure 1 schematically shows a top view of an embodiment of the road surface;
- Figure 2 shows a schematic cross-section of a porous strip according to the line II-II in Figure 1;
- Figure 3 and 4 schematically show views similar to Figures 1 and 2 of an alternative embodiment of the road surface;
- Figure 5 schematically shows a view similar to Figure 4 of a further alternative embodiment of the road surface; and
- Figure 6 shows a table indicating the fractions of an exemplary embodiment of an aggregate.

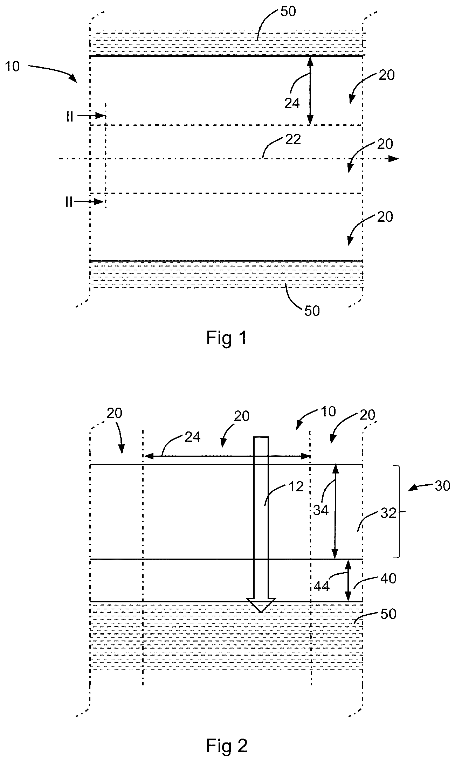

Figure 1 shows a top view of an embodiment of the road surface 10. The road surface 10, also known as road bed, surfacing, paving etc. may for instance regard a suitable surfacing for a road for vehicles, cyclists, pedestrians etc., but may also regard an appropriate surfacing for other likely locations such as for instance parking lots, storage depots, warehouses, container terminals etc., as generally known to a skilled person. The embodiment shown of the road surface 10 comprises three porous strips 20. As shown, said three porous strips 20 are disposed parallel to each other and they run substantially according to a longitudinal direction 22. According to the exemplary embodiment shown, the three porous strips 20 have the same width 24. However, it is clear that alternative embodiments are possible, wherein generally the road surface 10 comprises one or more porous strips. In addition, according to alternative embodiments the strips 20 do not need to have the same width and they do not need to be disposed parallel adjacent each other either.

Figure 2 shows a cross-section of porous strip 20 of the road surface 10 according to the line II-II in Figure 1. The cross-section of Figure 2 therefore schematically shows the cross-section of the porous strip, transverse to the longitudinal direction 22. As shown, the porous strip 20 comprises a porous upper layer 30 and a water-permeable, non-bonded foundation 40. According to the embodiment shown, the porous upper layer 30 is disposed on top of the foundation 40, and the foundation is disposed on top of the ground 50. In other words, the foundation is positioned between the porous upper layer 30 and the ground 50. As schematically shown by arrow 12, both the porous upper layer 30 and the foundation 40 are water-permeable, in order for water to seep into the ground 50.

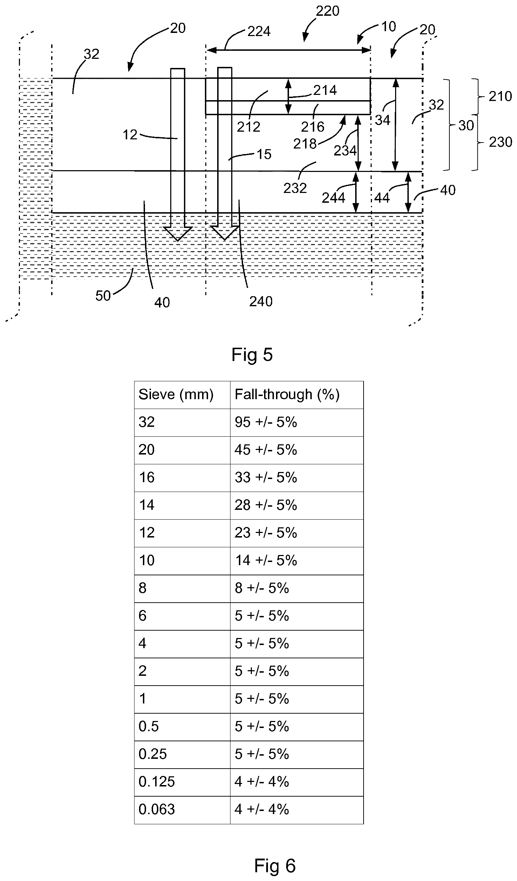

The porous upper layer 30 consists of a porous asphalt concrete layer 32 comprising a mixture of bitumen and aggregate. As is known to a skilled person, asphalt concrete, often also referred to as asphalt, tarmac, bitumen macadam, etc., comprises a mixture of bitumen and aggregate that is being used as roadbed material, the aggregate being bonded by the bitumen, is disposed in one or more layers and subsequently pressed together. Such a porous asphalt concrete layer 32, also porous asphalt layer, comprises a porosity allowing water fallen on said porous upper layer 30 to seep through in this porous upper layer 30 and subsequently to the underlying layers of the roadbed. The porous asphalt concrete layer 32, according to the embodiment shown, comprises aggregate having a grain-size distribution or grading of the 14-32 type. That means aggregate comprising a fraction of 65% or more that cannot pass through a 14mm-sieve and a fraction of 90% or more that can indeed pass through a 32mm-sieve. According to one exemplary embodiment the aggregate may for instance comprise the fractions indicated in the table shown in Figure 6.

From the table of Figure 6 it is therefore clear that the aggregate with a fall-through of 95%+/- 5% through a 32mm-sieve comprises a fraction of 95% +/- 5% that can pass through a 32mm-sieve. Furthermore, it is clear that in accordance with the table of Figure 6, a fall-through of 45% +/- 5% through a 20mm-sieve corresponds to a fraction of 45% +/- 5% that cannot pass through a 20mm-sieve. Furthermore, it is also clear that in accordance with the table of Figure 6, a fall-through of 33% +/- 5% through a 16mm-sieve corresponds to a fraction of 67% +/- 5% that cannot pass through a 16mm-sieve. Aggregate for the porous asphalt concrete layer 32, as is known to a skilled person, consists of crushed stones or any other suitable granulated material, for instance crushed natural stone, crushed gravel, pebble, crushed rubble, etc. or any other suitable aggregate to be used in porous asphalt concrete.

According to the exemplary embodiment shown, the porous asphalt concrete layer 32 comprises a porosity of 28% According to alternative embodiments the porosity may also be or 29%, 30%, 31%, or 32% or any other suitable value in the range of 27% - 35%. Such a porosity, that means the amount of cavities in the porous asphalt concrete layer 32 expressed in a percentage between 0% and 100%, expresses the fraction of the volume of the cavities in the porous asphalt concrete layer 32 relative to the overall volume of the porous asphalt concrete layer 32. According to an exemplary embodiment shown in Figures 1 and 2, the porous asphalt concrete layer 32 comprises a thickness in the range of 18cm to 25cm, for instance 20cm. Therefore, it is clear that, as shown, the porous upper layer 30 formed by the porous asphalt concrete layer 32 also comprises a thickness 34 in the range of 18cm to 25cm. Furthermore, it is clear that, according to the exemplary embodiment shown in Figures 1 and 2, the porous upper layer 30, forms the upper layer of the porous strips 20, and that no further layers have been disposed on top of the porous upper layer 30 of the porous strips 20. As also shown in Figure 2, the water-permeable, non-bonded foundation 40 is positioned between the porous upper layer 30 of the porous strips 20 and the ground 50. That means that, according to the exemplary embodiment shown, the porous upper layer 30 is disposed so as to link on top of the foundation 40. Alternative embodiments are possible, as long as in general the water-permeable, non-bonded foundation 40 is disposed such between the porous upper layer 30 and the ground as to enable water to seep into the ground 50. That means, water, for instance rainwater, falling in onto the porous upper layer 30 being able to seep through this porous upper layer 30, down to the water-permeable, non-bonded foundation 40, where it can seep onward through this water-permeable, non-bonded foundation 40 down to the ground 50, as shown by arrow 12. The porous strip 20 therefore does not comprise elements preventing water from seeping through from the porous upper layer 30 to the ground 50, that means no elements, such as layers or films that are not water-permeable between the porous upper layer 30 and the foundation 40, or between the foundation 40 and the ground 50. According to the exemplary embodiment shown, the foundation 40 comprises a thickness 44 in the range of 12cm or larger, for instance 15cm.

That way a road surface 10 is realized, which enables the rainwater falling on it to infiltrate into the ground 50 underneath the road surface 10. Moreover, according to the embodiments described above, the buffer capacity of the porous upper layer 30 of the porous strips 20 of the road surface 10 preferably is 2,81 per surface area of 1m² per cm of thickness, or in other words 2.81/m²/cm or in other words 2.81/m²/cm or larger. That means that the porous upper layer 30 of the porous strips 20 of the road surface 10 is capable of buffering 2801 of water per 1m³ of volume. Among other things, the water is then buffered in the cavities of the porous asphalt concrete layer 32 of the porous upper layer 30. Said water buffered in the porous strips 20 can subsequently seep further into the ground 50, which, as is known to a skilled person, takes place at a rate depending on the soil type of the ground 50. It is important here that the water fallen on the porous strips 20 of the road surface 10 can infiltrate towards the ground 50 and therefore does not need to be drained off by means of drainage elements such as for instance gutters, sewer systems, pipes etc. Furthermore, due to the buffer capacity of the porous strips 20 of the road surface 10 itself it can be avoided that a buffer installation would have to be provided for the drained off water in order to prevent overburdening the drainage network, for instance in case of sudden precipitation peaks. The buffer capacity of the porous strips 20 of preferably 280l/m³ or more allows such precipitation peaks to be buffered in the porous strips 20 themselves, after which said buffered water can seep into the ground 50. The latter is for instance important to keep the local groundwater level up to the required standard. In particular in densely built regions, or regions having a relatively large amount of surfaced areas with impenetrable materials, there is an increasing risk of rainwater not being sufficiently capable of infiltrating into the ground as it is drained off via the drainage elements to a drainage network. This may give rise to a disruption or an insufficient replenishing of the water-bearing strata and/or water reserves in the ground 50, as a result of which the water supply, for instance in periods of prolonged drought, may be at risk.

It is clear then that in preferred embodiments the buffer capacity of the porous strips 20 of the road surface 10 is 280l/m³ or more, for instance 300l/m³ or more. Said buffer capacity for instance allows dealing with precipitation peaks due to the buffering action of the porous strips 20 themselves. The buffered water can then infiltrate into the ground 50 underneath the porous strips 20 of the road surface 10. For an embodiment wherein the porous strips 20 of the road surface 10 comprise a porous asphalt concrete layer 32 with a porosity of 28% and a thickness of 0.20m, the buffer capacity of the porous asphalt concrete layer 32 can be considered the product of the thickness of the porous asphalt concrete layer 32, the porosity of the porous asphalt concrete layer, and the number of liters of water per cubic meter. In this exemplary embodiment that means that the buffer capacity of the porous asphalt concrete layer 32 will approximately correspond to porosity x 1000l/m³ = 28% x 1000l/m³ = 280l/m³. That means that for a top surface of 1m² of road surface 10, the porous upper layer 30 with a thickness of for instance 20cm is capable of buffering 561 of water. If the porous strip 20 according to this exemplary embodiment furthermore comprises a water-permeable, non-bonded foundation 40 as well, for instance of 15cm, it is clear that the buffer capacity of the porous strip 20, due to the additional buffer capacity of the hollow cavities present in the foundation 40, will be higher than the buffer capacity of the porous asphalt concrete layer 32. For the exemplary embodiment described above, this for instance means that the buffer capacity of the porous strips 20 for instance is 170l/m³ or more, or in other words that per 1m² of the top surface of the porous strips 20 of the road surface having an overall thickness of 20cm of porous upper layer 30 + 15cm of non-bonded foundation 40, the road surface 10 is capable of buffering for instance 601 of water or more.

The buffer capacity of an embodiment of the porous strips 20 and/or the porous asphalt concrete layer 32 of the road surface 10 can be verified in experiments, for instance by disposing a specific surface area of such a porous strip 20 in a waterproof basin and checking how much fluid can be buffered by this surface area of porous strip 20, or any other suitable alternative method. As is known to a skilled person, the porosity may for instance be determined as described in the NBN EN 12697-6 standard, procedure D.

It will furthermore be clear that realizing the grain-size distribution or grading of the aggregate of the porous asphalt concrete layer 32 of the upper layer 30 of the porous strips 20 of the road surface 10 is not randomly selected. Such grading, for instance of the 20-32 type, allows creation of sufficient cavities in the porous asphalt concrete layer 32 for instance to achieve a porosity of 28%, wherein said cavities are also sufficiently linked to each other for allowing water to seep through the porous asphalt concrete layer 32. Such grading substantially corresponds to an embodiment of the aggregate of the porous asphalt concrete layer 32 comprising a fraction of 50% or more that cannot pass through a 20mm-sieve and that can indeed pass through a 32mm-sieve. In addition, such grading ensures that even in case of such relatively high porosity, the aggregate of the asphalt concrete layer 32 is sufficiently anchored and provides resistance to loading the porous upper layer 30 of the road surface, for instance when a vehicle drives over the road surface 10. Furthermore, the grain-size distribution and the porosity of the embodiments stated above, cooperate to form cavities that are sufficiently resistant to clogging up due to pollution with sand, soil, dust, etc. that ends up on the road surface. That way the porous action of the porous upper layer is guaranteed in the long term. Ultimately this grain-size distribution and the porosity of the above-mentioned embodiments ensure that the openings at the upper surface of the road surface 10, formed by corresponding cavities in the porous asphalt concrete layer 32 of the upper layer 30, remain sufficiently small to walk on in any suitable footwear. Furthermore, it is also clear that the porous asphalt concrete layer 32 of the upper layer 30 is homogeneous, that means that in the entire layer the same porous asphalt concrete mixture is being used, with aggregate comprising the same grain-size distribution and the same bitumen. This allows for this porous asphalt concrete layer 32 to be produced efficiently and easily, as only one single type of porous asphalt concrete is being used.

Although in general embodiments are possible wherein any kind of suitable bitumen is utilized for the porous asphalt concrete layer 32, preferably use is made of a polymer bitumen and/or fiber-enriched bitumen, such as for instance a polymer bitumen of the 45/80-50 type. Polymer bitumen or fiber-enriched polymer bitumen is preferred as it results in a porous asphalt concrete layer 32 that can be processed better and has a higher resistance to torsion and raveling.

Furthermore, it is also clear that the porous asphalt concrete layer 32, comprises no or hardly any concrete or cement, that means a fraction the skilled person considers negligible. Compared to concrete, or cement-based mixtures, the porous asphalt concrete layer 32 provides the advantage of the hardening time being much shorter. Moreover, a concrete strip is not suitable for being disposed continuously and expansion joints must be made to prevent damage in the event of temperature changes.

In addition, the thickness of the porous upper layer 30 of for instance 20cm +/- 1cm also substantially differs from the thickness of known upper layers utilizing highly pervious asphalt which for instance is only 2.5cm and the purpose of which predominantly is noise reduction. Moreover, in such known layers of highly pervious asphalt a considerably smaller grain-size distribution is utilized for the aggregate, for instance of the 0-14 type, as a result of which the cavities are more prone to pollution, reducing their long-term effect. The thickness of the porous upper layer 30 of the porous strips also allows the realization of a larger load distribution. That means that the porous upper layer 30 distributes a load exerted on the upper surface over a larger surface area at the level of the foundation 40. The thickness 34 of the porous upper layer 30 in that way ensures that the thickness 44 of the foundation 40 can be kept limited. For instance, in a foundation 40 having a thickness 44 of 15cm +/- 1cm, loose aggregate may suffice. It goes without saying that alternative embodiments are possible wherein the thickness 44 of the foundation 40 is 12cm or larger, for instance 20cm, 25cm, 30cm, etc. but it is clear that preferably the thickness of the foundation 40 is kept limited in order to reduce the use of materials for constructing the roadway.

Although in the exemplary embodiment shown the foundation 40 is directly linked to the ground, it is clear that according to alternative possible embodiments a suitable sub-foundation is disposed at the upper side of the ground 50. It is clear that such a sub-foundation also consists of a non-bonded material, such as for instance crushed rubble, sand, etc. In particular if a suitable sub-foundation known to the skilled person is disposed, for instance a sub-foundation able to resist loads of 35MPa, it turned out that a thickness 44 of the foundation 40 consisting of approximately 15cm of loose aggregate, suffices.

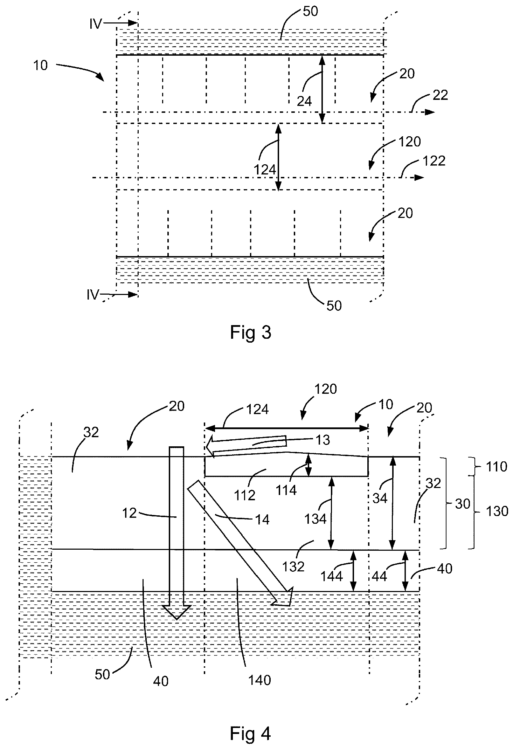

Figures 3 and 4 show views similar to Figures 1 and 2 of an alternative embodiment of the road surface 10. As can be seen in Figure 3, in addition to a number of porous strips 20, the road surface 10 also comprises an impermeable strip 120. Similar elements are referred to with the same reference numbers as in the exemplary embodiment shown in Figures 1 and 2. Said similar elements, in particular the porous strips 20 of the road surface 10 are configured similarly and have a similar function as described above. As can best be seen in the top view of Figure 3, this embodiment, for instance regards a road surface of a parking lot, wherein the impermeable strip 120 forms the roadway for the vehicles, which strip is disposed adjacent to the porous strips 20 where the parking spaces for the vehicles are disposed, as schematically shown in dashed lines. According to the exemplary embodiment shown in Figure 3, the longitudinal direction of this impermeable strip 120 runs parallel to the longitudinal direction 22 of the porous strips 20 and the impermeable strip 120 has a width 124 that is almost equal to the width 24 of the porous strips. It goes without saying that alternative embodiments are possible wherein for instance the widths of the porous strips 20 and the impermeable strips 120 are different, and wherein another number, function, direction etc. of the porous strips and impermeable strips 120 are present in the road surface. As long as in general, according to such embodiments, the road surface 10, adjacent to one or more porous strips, furthermore also comprises one or more impermeable strips 120, adjacent to at least one of the porous strips 20.

Figure 4 shows a cross-section according to the line IV-IV in Figure 3, transverse to the longitudinal direction 22, 122 of the respective porous and impermeable strips 20, 120 of the embodiment of the road surface 10 shown. As can be seen, the porous strips 20 are configured similar to what is described above in relation to the embodiment of Figures 1 and 2. According to this exemplary embodiment, the impermeable strip 120, as can be seen, is also disposed on a water-permeable, non-bonded foundation 140 that is positioned between a porous intermediate layer 130 and the ground 50, in order for water to seep into the ground 50. Similar to what is described above in relation to the foundation 40 of the impermeable strips 20, the foundation 140 of the impermeable strip 120 comprises a thickness in the range of 12cm or larger. It is clear that, similar to what is shown in exemplary the embodiment of Figure 4, preferably the foundations 40, 140 of the porous and impermeable strips are similar, so that the same common foundation can be laid for the road surface 10, irrespective of the specific strips of the road surface of which the foundation will be part later on.

As shown in Figure 4, the exemplary embodiment of the impermeable strip 120 comprises a porous intermediate layer 130 disposed on top of the foundation 40. According to this exemplary embodiment, the porous intermediate layer 130 preferably consists of a porous asphalt concrete layer 132 of which the mixture of bitumen and aggregate corresponds to the mixture of the porous asphalt concrete layer 32 of the porous upper layer 30 of the porous strips 20, as described above in more detail. It goes without saying that alternative embodiments are possible, as long as in general the porous intermediate layer 130 consists of a porous asphalt concrete layer 132 comprising a mixture of bitumen and aggregate, of which the aggregate comprises a fraction of 65% or more that cannot pass through a 14mm-sieve and a fraction of 90% or more that can indeed pass through a 32mm-sieve. Also similar to what is described above in relation to the porous asphalt concrete layer 32 of the porous upper layer 30, the porous asphalt concrete layer 132 of the porous intermediate layer 122 preferably comprises a porosity of 28% +/- 1%, or more in general a porosity in the range of 27% up to and including 35%. That way similar to what is described above, a porous asphalt concrete layer 132 can be obtained with sufficient resistance to pollution and having a sufficiently large buffer capacity. Unlike the porous strips 20, the impermeable strip 120 according to the exemplary embodiment shown, furthermore comprises an impermeable upper layer 110 that is disposed on top of the porous intermediate layer 130. This impermeable upper layer 110 consists of an impervious asphalt concrete layer 112. It is therefore clear that such an impermeable upper layer 110 of the impermeable strip 120 does not allow water fallen on top of the upper surface of the impermeable strip 120 to seep through this impermeable upper layer 110. However, it is clear that the water fallen on an impermeable strip 120 of the road surface 10, as schematically shown by arrow 13, can flow away to an adjacent porous strip of the road surface 10. According to the exemplary embodiment shown, the impermeable upper layer at its upper surface as shown, comprises a suitable roof profile supporting the water to flow down in the direction of both adjacent permeable strips 20. However, it is clear that alternative exemplary embodiments are possible, wherein preferably the top surface of the impermeable strips 120, that means the top surface of the upper impermeable layer 110 of these impermeable strips 120, at least partially comprise a suitable gradient in the direction of an adjacent porous strip 20. A suitable gradient is known to the skilled person, and typically is a gentle gradient of for instance 1° to 2°. Further alternative embodiments are possible, for instance wherein such a gradient is dispensed with.

The impermeable upper layer 110 of such an impermeable strip 120 comprises a greater resistance to loads due to torsion. Therefore, it is advantageous to dispose such impermeable strips 120 in zones of the road surface 10 that are exposed to the largest load due to torsion. In the exemplary embodiment shown of the road surface of a parking lot, the zone of the roadway between the parking spaces typically is exposed to the largest torsion as the vehicles perform their turning motion there, in order to drive into the parking space. It is clear that alternative embodiments are possible. For instance an intersection, a zone near a road access or exit, etc. can be considered zones of the road surface that are subjected to the largest load due to torsion, for a road surface of a roadway. Or for instance in a road surface of a highway or other roadway, which in addition to the lanes, also have a (hard) shoulder, the lanes can also be considered zones of the road surface that are subjected to the largest load due to torsion, and according to an exemplary embodiment the lanes can be constructed as impermeable strips 120, whereas the adjacent (hard) shoulder can be constructed as a porous strip 20 of the road surface 10. It is clear that further alternative embodiments are possible.

Such an embodiment of the road surface 10 having one or more impermeable strips 120 and one or more adjacent porous strips 20, allows realizing a larger resistance to torsion in the zones of the impermeable strips 120, whereas the fallen water can still seep into the ground 50 from these impermeable strips 120 via the adjacent porous strips 20. As a result, the above-mentioned advantages of drainage of falling water into the ground 50, as well as the buffering action of the porous strips 20 is preserved, which, as mentioned above, reduces or ends the need for additional drainage elements and is advantageous for ensuring sufficient groundwater seeping into the ground, in particular in regions having a large percentage of surfaced area.

According to the exemplary embodiment shown in Figure 4, it is also clear, as schematically shown by arrow 14, that water from an adjacent porous strip 20 can seep to the porous intermediate layer 130 of an impermeable strip 120. Therefore, it is clear that in this way the porous intermediate layer 130 also contributes to the buffer capacity of the road surface 10 for instance to deal with precipitation peaks, which will afterwards be able to seep into the ground 50 depending on the infiltration capacity. According to the exemplary embodiment shown in Figure 4, the thickness 134 of the porous intermediate layer 130 for instance is 16cm and the thickness 114 of the impermeable upper layer 110 for instance is 4cm. According to the exemplary embodiment shown, the sum of the thickness 114 of the impermeable upper layer 110 and the thickness 134 of the porous intermediate layer 130 of the impermeable strip 120 is equal to the thickness of the porous upper layer 30 of the adjacent porous strip 20, which for instance is 20cm. It is clear that in such an exemplary embodiment, wherein for instance the porosity is 28%, the buffer capacity of the porous asphalt concrete layer 132 of the porous intermediate layer 130 will approximately correspond to porosity x 1000l/m³ = 28% x 1000l/m³ = 280l/m³, or in other words that for a surface area of 1m² of impermeable strip 120, a porous intermediate layer 130 having a thickness of 0.16m is capable of buffering 451 of water in the cavities of the porous asphalt concrete layer 132. That way the impermeable strips 120 also contribute to the buffer capacity of the road surface in a substantial manner as a result of which additional installations for buffering and draining off water can be dispensed with, which simplifies the construction and laying of the road surface 10. Such a buffer capacity, as well as the size of the cavities defined by the porosity and the used aggregate, moreover ensures that the porous intermediate layer 130 is also pollution resistant in a robust manner.

It goes without saying that alternative embodiments are possible, in which the above-mentioned thicknesses 114, 134, 34 are larger. The thickness 134 of the porous intermediate layer 130 of an impermeable strip 120 of the road surface 10 preferably is in the range of 16cm to 23cm. Such a thickness of the porous intermediate layer 130 is suitable for the use of the mixture of bitumen and aggregate similar to what is described above in relation to the porous upper layer 30 of the of the porous strips 20.

The impervious asphalt concrete layer 112 consists of a suitable type of impervious asphalt concrete as known to a skilled person for use as a top layer of a road surface 10, such as for instance an impervious asphalt concrete type 4 according to standard specifications SB250 version 3.1, for instance an impervious asphalt concrete type AB-4C. One embodiment of such an impervious type of asphalt concrete for instance consists of a mixture having a bitumen content of 5.9% +/- 0.5%. The aggregate of such an embodiment typically comprises aggregate of which a fraction of 95% or more can pass through a 10mm-sieve. It goes without saying that alternative embodiments are possible, however, the aggregate of such an impervious asphalt concrete layer 112 preferably consists of a fraction of 95% or more that can pass through a 16mm-sieve, preferably through a 14mm-sieve. In addition, such a type of impervious asphalt concrete layer 112 is suitable to be disposed on the porous intermediate layer 130, as a proper bonding is possible between both asphalt layers and in addition the viscosity of the asphalt of the impervious asphalt concrete layer 112 and the combination of the thickness, grain-size and porosity of the porous intermediate layer 130 prevents the risk that during disposing said impervious asphalt concrete layer 112 the cavities of the porous intermediate layer 130 would clog up. The use of an impervious asphalt concrete layer 112 as impermeable upper layer 110 for the impermeable strips moreover provides the advantage that said impermeable upper layer 110 is able to link seamlessly to the porous asphalt concrete layer 32 of one or more adjacent porous strips 20.

Clearly, alternative embodiments are possible in which unlike the embodiment shown in Figures 3 and 4, the thicknesses of the layers of the porous and impermeable strips, relate differently to each other. Preferably, the thickness 114 of the impermeable upper layer 110 of the impermeable strip 120 is larger than or equal to 4cm and the thickness 134 of the porous intermediate layer 130 of the impermeable strip 120 is larger than or equal to 16cm; and/or the thickness of the porous upper layer 30 of the adjacent porous strip 20 is larger than or equal to 20cm. Such thicknesses of the layers are advantageous as that way they allow realizing a larger load distribution at the level of the foundation 40 of loads exerted on the upper surface of the road surface 10. That way a light-weight, non-bonded foundation 40 that therefore allows water to pass through well, will suffice in most applications, such as for instance a foundation 40 of non-bonded aggregate having a thickness of for instance 15cm. Although in the exemplary embodiments there is question of a non-bonded foundation 40 that is disposed on the ground 50, it is clear that, as is known to the skilled person, a suitable sub-foundation can also be disposed in or on the ground 50 and therefore underneath the foundation 40, the sub-foundation for instance preferably being suitable for resisting a load of 35MPa or more. It goes without saying that such a sub-foundation, as is known to the skilled person, is also water-permeable, similar to the foundation 40, in order for water to seep further into the ground 50. As is known to the skilled person, such a sub-foundation may for instance consist of a suitable sand layer, a layer with a suitable mixture of aggregate and sand, locally stabilized soil mixture, etc. and the sub-foundation for instance comprises a thickness of for instance 15cm or more, preferably 20cm or more. As is known to the skilled person, the thickness and the suitable material of such a sub-foundation can be determined in relation to the specific type of ground 50 on which the road covering is disposed. Furthermore, it is clear that for specific soil types a sub-foundation can be dispensed with, so that a foundation 40 disposed on the ground suffices.

According to further alternative embodiments, in particular when the infiltration capacity of the ground 50 is insufficiently high to allow a sufficiently rapid seeping of water from the road surface 10 into the ground 50, use can be made of elements known to the skilled person that are introduced into the ground 50 to increase the infiltration of water. Such elements for instance regard suitable drainage systems, such as for instance sand drains, synthetic drains or any other suitable vertical or other drainage system, which preferably ensures that water can penetrate through this soil stratum in order to provide a passage in that way to a more suitable soil stratum for replenishing groundwater.

The embodiments of the road surface described above can easily be disposed using existing means for constructing a road surface including an asphalt layer. Moreover, they can also be used to replace an existing surfaced road surface, after the latter having been removed down to a wanted depth, wherein the foundation and sub-foundation, if any, can be reused if they are of the suitable type described above. According to an exemplary embodiment the method for disposing the one or more porous strips 20 of the road surface consists of the following steps. Clearing the ground 50 down to the wanted depth at the location where the road surface will be disposed. Subsequently disposing the foundation 40 on top of the ground 50, or a suitable sub-foundation situated therein. According to an example, for instance a non-bonded, water-permeable foundation 40 is disposed, such as for instance a layer of non-bonded aggregate having a thickness of for instance 15cm. Optionally, as is known to a skilled person, the foundation can be compacted and levelled out in a suitable manner, for instance by means of a suitable rolling operation, so that the desired depth for the layers situated above it and/or the wanted stability of the foundation 40 is achieved. Subsequently the porous upper layer 30 is disposed on top of the foundation 40. Preferably this takes place in two layers. For instance, the first 10cm-layer of the porous asphalt concrete described above, for instance having a porosity of 28%, a grain-size distribution of the 20-32 type. According to the exemplary embodiment that makes use of the 45/80-50 type of asphalt, the asphalt is disposed at a suitable temperature for instance in the range of 140°C up to and including 190°C. It is clear that alternative embodiments are possible, in which for example such a type of asphalt is disposed at a temperature in the range of 110°C up to and including 190°C. Once this first layer has been disposed, preferably a suitable period of time is waited before a second layer of this porous asphalt concrete is disposed on top of this first layer of porous asphalt concrete. This is done this way in order to allow the porous asphalt concrete to cool down sufficiently, for instance down to a temperature of 85°C or lower, preferably down to a temperature of 75°C or lower. According to this exemplary embodiment, this approximately corresponds to a for instance 15-minute period or longer, preferably a 30-minute period or longer. That way the risk of imprints being made by trucks, finishers and/or other vehicles or equipment used during laying the second layer of porous asphalt concrete on top of the first layer, is reduced. After that the second layer of porous asphalt concrete is subsequently disposed on this first layer. The thickness of this second layer for instance is 10cm as well and is made of the same asphalt concrete as the first layer. Therefore, it is clear that both layers of asphalt concrete having a thickness of 10cm, which, as described above were disposed on top of each other in this way, together form the porous asphalt concrete layer 32 having a 20cm-thickness of the upper layer 30 of the road surface 10. Once the second layer has been disposed, the porous asphalt concrete layer 32 is rolled, as is known to a skilled person, until the rolling prints have been smoothed away. As due to the porosity and grain-size distribution, the porous asphalt concrete layer 32 has relatively large cavities, relatively light rolling will suffice. It is clear that according to further embodiments other operations known to the skilled person can be carried out subsequent thereto, such as for instance the finishing of the joints, signposting the road surface, etc. It is clear that further embodiments are possible wherein the porous upper layer 30 is disposed in two layers that are disposed on top of each other. That means that the porous asphalt concrete layer 32 of the porous upper layer 30 is disposed in two layers when being disposed. However, it is clear, as is known to the skilled person, that once the porous asphalt concrete layer 32 has been disposed, even when this has taken place in two layers when being disposed, the porous asphalt concrete layer 32 can be considered a consistent, homogeneous, single-part porous asphalt concrete layer 32 consisting of the same mixture of bitumen and aggregate and showing similar properties as if the porous asphalt concrete layer 32 had been disposed in one single layer. Furthermore, it is also clear that according to such embodiments the sum of the thicknesses of the two layers of porous asphalt concrete disposed on top of each other, corresponds to the thickness 34 of the porous asphalt concrete layer 32 of the porous upper layer 30. In such embodiments each of the two layers of the porous upper layer 30 comprises a thickness of 9cm or larger, for instance two layers of 10cm thickness each, resulting in a porous upper layer 30 of 20cm.

Similar to what is described above in relation to disposing the porous strips of the road surface, the impermeable strips of the road surface can also easily be disposed using existing means. Similar to what is described above for the foundation 40 of the porous strips 20, a foundation 140 can be disposed on the ground 50. It is clear that for an exemplary embodiment of the road surface 10, for instance similar to what is shown in Figures 3 and 4, the foundation 40, 140 for both the porous and the impermeable strips 20, 120 of the road surface 10, can be laid jointly, as the foundation 40, 140 in such exemplary embodiments preferably consists of the same material, for instance loose aggregate, and even shows the same or a similar thickness. Furthermore, similar to what is described above for the porous upper layer 30, the porous intermediate layer 130 can be disposed on top of the foundation 140. According to one exemplary embodiment a porous intermediate layer 130 of 16cm can for instance be laid in two 8cm-layers of the porous asphalt concrete described above. However, it is clear that alternative embodiments are possible, wherein preferably the porous intermediate layer is disposed in two layers situated above one another, each having a thickness of at least 7cm. Finally, the impermeable upper layer 110, for instance having a thickness of 114, is disposed on the porous intermediate layer 130. This impermeable upper layer 110 as well, preferably is disposed in two layers of impervious asphalt concrete, for instance two layers having a thickness of 2cm each. Although according to such an exemplary embodiment the porous intermediate layer 130 and/or the impermeable upper layer 110 are realized in two layers being disposed one after the other, it is nonetheless clear that after disposing such a porous intermediate layer 130 and/or impermeable upper layer 110, respectively, they can be considered one single layer as they show single-part, consistent homogeneity in terms of the mixture of asphalt concrete that they consist of. Furthermore, it is clear that alternative embodiments are possible, wherein for instance the porous intermediate layer 130 and/or the impermeable upper layer 110 are disposed in one layer. However, it is advantageous to dispose the porous intermediate layer and/or the impermeable upper layer 110 in two layers situated on top of each other. Preferably, each of the two layers of the porous intermediate layer 130 comprises a thickness of at least 7cm, as such a thickness allows a layer consisting of asphalt concrete of the mixture described above, to be disposed optimally. Similarly, preferably each of the two layers of the impermeable upper layer 110 comprises a thickness of at least 1.5cm. It is clear then that preferably, as already stated above, the impermeable strips 120 are disposed in zones of the road surface 10 where the largest torsion takes place.

Another variety of an embodiment is schematically shown in Figure 5, which comprises a view similar to the view shown in Figure 4. Similar elements are referred to by the same references and have a similar structure and function as described above. As shown in Figure 5, the road surface 10 comprises a paving strip 220. It is clear that the construction of the paving strip 220 is largely similar to the impermeable strip 120 shown in Figure 4. That means that a water-permeable, non-bonded foundation 240 is disposed on top of the ground. On top of this foundation 240, a porous intermediate layer 230, and on top of this porous intermediate layer 230, instead of an impermeable upper layer 110, a paving layer 210. Contrary to the impermeable upper layer 110 of the impermeable strip 120, as is known to the skilled person, such a paving layer 210 does allow water to seep through such a paving layer 210 to the layers of the road surface lying underneath, more specifically via the joints between the paving bricks of the paving layer 210. As shown in Figure 5 the upper paving layer 210 of the paving strip 220 comprises an upper paving 212 comprising paving bricks, such as for instance concrete paving blocks, natural paving bricks, ... and the joint filling disposed between the paving bricks, such as for instance natural or artificial sand. As is known to the skilled person, the upper paving 212 typically comprises a thickness of 5cm to 15cm, which almost corresponds to the thickness of the paving bricks. As shown in more detail, the paving layer 210 also comprises a layer to be paved 216 disposed underneath the upper paving 212. Such a layer to be paved preferably consists of a suitable non-bonded granulated material, such as for instance, porphyry, sandstone, crushed aggregate or gravel, etc. typically having a grain-size distribution of the 0-4mm or 0-6.3mm type. The thickness of such a layer to be paved 216 preferably is 3cm to 4cm and its function is to secure the paving bricks and set off any differences in thickness of the paving bricks of the upper paving 212. Furthermore, as shown, the paving layer 210 comprises a geotextile 218 disposed underneath the layer to be paved 216. As can be seen this geotextile 218 is therefore situated between the porous intermediate layer 230 and the layer to be paved 216 of the paving layer 210. As is known to a skilled person, such a geotextile 218 comprises a water-permeable textile, suitable to be used in the ground in road engineering applications. Said geotextile 218 ensures that during laying the paving strip 220 the porous intermediate layer 230 does not clog up due to the layers disposed on top of it such as the layer to be paved 216 of the paving layer 210. Such a geotextile 218 therefore is water-permeable indeed, but during laying or after that sufficiently prevents granulated materials, sand, etc. from penetrating the porous intermediate layer 230 thus reducing the risk of the cavities of the porous intermediate layer 230 clogging up, as a result of which the buffer capacity of this porous intermediate layer 230 will remain available in the long term as well. The thickness of such a paving layer 210 therefore typically is in the range of 8cm to 16cm. The porous intermediate layer 230 of the paving strip 220 is similar to the porous intermediate layer of the impermeable strip 120 described above. As shown, the porous intermediate layer 230 therefore in general is positioned underneath the upper paving layer 210 and the porous intermediate layer 230 therefore also consists of a porous asphalt concrete layer 232 comprising a mixture of bitumen and aggregate comprising a fraction of 65% or more that cannot pass through a 14mm-sieve and a fraction of 90% or more that can indeed pass through a 32mm-sieve. Similar to what is described above, the porous asphalt concrete layer 232 comprises a porosity in the range of 27% up to and including 35%. Furthermore, the porous asphalt concrete layer 232 comprises a thickness 234 in the range of 10cm up to and including 20cm. Finally, also similar to the porous strip 20 and the impermeable strip 120, the paving strip 220 comprises a water-permeable, non-bonded foundation 240 positioned between the porous intermediate layer 230 and the ground 50, in order for water to seep into the ground 50. As already described above, the foundation 240 generally comprises a thickness in the range of 12cm or larger, and there are possible alternative embodiments wherein also a sub-foundation is introduced into the ground 50 underneath the foundation 240. Furthermore, it is clear that according to the exemplary embodiment shown, similar to what is described above for an impermeable strip 120, the paving strip 220 can also be disposed adjacent to a porous strip 20 of the road surface 10. In this example in a zone of the road surface 10 where the largest torsion load is effected, similar to what is described above. Disposing the foundation 240 and the porous intermediate layer 230 can also take place in a manner similar to what is described above. Subsequently in a manner known to the skilled person, the upper paving layer 210 can be disposed by disposing the geotextile 228 on the upper side of the porous intermediate layer 230, disposing the layer to be paved 226 on top of it and subsequently disposing the paving bricks on top of that and disposing the joint filling in between the joints Although according to the exemplary embodiment shown only one paving strip 220 is shown, it will be clear that alternative exemplary embodiments are possible, wherein the road surface comprises one or more paving strips 220. Furthermore, it is clear that, as schematically shown by arrow 15, the paving strips 220 of the road surface also allow the water to seep through the road surface 10 to the ground, and that the porous intermediate layer 230, similar to what is described above, has a buffer function.

According to the exemplary embodiment shown, the paving strip 220 comprises the same thickness as the adjacent porous strip 20. However, it will be clear that alternative embodiments are possible, wherein for instance the thickness of the paving strip 220 differs from the thickness of the rest of the road surface 10, or wherein the top surface of the paving strip is situated at a different, for instance higher, level than the rest of the road surface 10, for instance when such a strip is laid as footpath, bicycle path, ... adjacent to the lanes of the road surface. Such a road surface 10, similar to what is described above, allows to reduce or dispense with the need for drainage elements in the road surface, due to the buffer capacity and the fact that the water can seep through the road surface into the ground. Clearly, further alternative embodiments are possible. According to one embodiment it is possible for instance that the road surface 10 comprises one or more paving strips 220, and optionally only one or more porous strips 20 or impermeable strips 120 as described above. Furthermore, it is also clear that, as described above in relation to the impermeable strips, the porous intermediate layer 230 can also be disposed in two layers of the same porous asphalt concrete when the road surface 10 is being disposed.

It goes without saying that further alternative embodiments and/or combinations of the embodiments described above are possible without deviating from the scope of protection as defined in the claims.

## Claims

1. Road surface (10) comprising one or more porous strips (20) comprising:
- a porous upper layer (30) consisting of a porous asphalt concrete layer (32) comprising:
- a mixture of bitumen and aggregate, the aggregate comprising a fraction of 65% or more that cannot pass through a 14mm-sieve and a fraction of 90% or more that can indeed pass through a 32mm-sieve;
- a porosity in the range of 27% up to and including 35%; and
- a thickness in the range of 18cm up to and including 25cm; and
- a water-permeable, non-bonded foundation (40) positioned between the porous upper layer (30) and the ground (50), in order for water to seep into the ground (50), the foundation (40) comprising a thickness in the range of 12cm or larger.

2. Road surface according to claim 1, wherein the porous upper layer (30) comprises a buffer capacity of 280l/m³ or more.

3. Road surface according to claim 1 or 2, wherein the porous upper layer (30) comprises a buffer capacity of 300l/m³ or more.

4. Road surface according to one or more of the preceding claims, wherein:
- the aggregate of the porous asphalt concrete layer (32) comprises a fraction of 50% or more that cannot pass through a 20mm-sieve and a fraction of 90% or more that can indeed pass through a 32mm-sieve; and
- a porosity of 28% +/- 1%.

5. Road surface according to one or more of the preceding claims, wherein the bitumen of the porous asphalt concrete layer (32) comprises one or more of the following:
- polymer bitumen;
- fiber-enriched bitumen.

6. Road surface according to one or more of the preceding claims, wherein the porous asphalt concrete layer (32) comprises no cement or concrete.

7. Road surface according to one or more of the preceding claims, wherein the porous upper layer (30) comprises a thickness (34) of 20cm +/- 1cm.

8. Road surface of one or more of the preceding claims, wherein the foundation (40) is loose aggregate and/or the thickness (44) of the foundation (40) is 15cm +/- 1cm.

9. Road surface according to one or more of the preceding claims, wherein the road surface (10) furthermore comprises one or more impermeable strips (120) adjacent to at least one of the porous strips (20), the impermeable strips (120) comprising:
- an impermeable upper layer (110) consisting of an impervious asphalt concrete layer (112);
- a porous intermediate layer (130), positioned underneath the impermeable upper layer (110), and consisting of a porous asphalt concrete layer (132) comprising:
- a mixture of bitumen and aggregate, the aggregate comprising a fraction of 65% or more that cannot pass through a 14mm-sieve and a fraction of 90% or more that can indeed pass through a 32mm-sieve;
- a porosity in the range of 27% up to and including 35%; and
- a thickness in the range of 16cm up to and including 23cm; and
- a water-permeable, non-bonded foundation (140) positioned between the porous intermediate layer (130) and the ground (50), in order for water to seep into the ground (50), the foundation (140) comprising a thickness in the range of 12cm or larger.

10. Method for the construction of a road surface according to one or more of the preceding claims, wherein the method comprises the following steps for disposing the one or more porous strips (20) of the road surface (10):
- disposing the foundation (40);
- disposing the porous upper layer (30) on top of the foundation (40).

11. Method according to claim 10, wherein the porous upper layer (30) is disposed in two layers disposed on top of one another.

12. Method according to claim 11, wherein each of the two layers of the porous upper layer (30) comprises a thickness (34) of 9cm or larger.

13. Method according to one or more of the claims 10 - 12, when depending on one or more of the claims 9 - 15, wherein the method comprises the following steps for disposing the one or more impermeable strips (120) of the road surface (10):
- disposing the foundation (140);
- disposing the porous intermediate layer (130) on top of the foundation (140);
- disposing the impermeable upper layer (110) on the porous intermediate layer (130).

14. Method according to claim 13, wherein:
- the porous intermediate layer (130) is disposed in two layers situated above one another; and/or
- the impermeable upper layer (110) is disposed in two layers situated above one another.

15. Method according to claim 14, wherein:
- each of the two layers of the porous intermediate layer (130) comprises a thickness of at least 7cm; and/or
- each of the two layers of the impermeable upper layer (110) comprises a thickness of at least 1.5cm.

## Patentansprüche

1. Straßendecke (10), umfassend einen oder mehrere poröse Streifen (20), umfassend:
- eine poröse Oberschicht (30), bestehend aus einer porösen Asphaltbetonschicht (32), umfassend:
- ein Gemisch aus Bitumen und Zuschlagstoff, der Zuschlagstoff umfassend einen Anteil von 65 % oder mehr, der nicht durch ein 14 mm Sieb hindurchgehen kann, und einen Anteil von 90 % oder mehr, der tatsächlich durch ein 32 mm Sieb hindurchgehen kann;
- eine Porosität in dem Bereich von 27 % bis und einschließlich 35 %; und
- eine Stärke in dem Bereich von 18 cm bis und einschließlich 25 cm; und
- ein wasserdurchlässiges, nicht gebundenes Fundament (40), das zwischen der porösen oberen Schicht (30) und dem Boden (50) positioniert ist, damit Wasser in den Boden (50) sickern kann, das Fundament (40) umfassend eine Stärke in dem Bereich von 12 cm oder mehr.

2. Straßendecke nach Anspruch 1, wobei die poröse obere Schicht (30) eine Pufferkapazität von 280 1/m³ oder mehr umfasst.

3. Straßendecke nach Anspruch 1 oder 2, wobei die poröse obere Schicht (30) eine Pufferkapazität von 300 1/m³ oder mehr umfasst.

4. Straßendecke nach einem oder mehreren der vorherigen Ansprüche, wobei
- der Zuschlagstoff der porösen Asphaltbetonschicht (32) einen Anteil von 50 % oder mehr, der nicht durch ein 20 mm Sieb hindurchgehen kann, und einen Anteil von 90 % oder mehr, der tatsächlich durch ein 32 mm Sieb hindurchgehen kann, umfasst; und
- eine Porosität von 28 % +/-1 %.

5. Straßendecke nach einem oder mehreren der vorherigen Ansprüche, wobei das Bitumen der porösen Asphaltbetonschicht (32) eine oder mehrere der folgenden Eigenschaften umfasst:
- Polymerbitumen;
- mit Fasern angereichertes Bitumen.

6. Straßendecke nach einem oder mehreren der vorherigen Ansprüche, wobei die poröse Asphaltbetonschicht (32) keinen Zement oder Beton umfasst.

7. Straßendecke nach einem oder mehreren der vorherigen Ansprüche, wobei die poröse obere Schicht (30) eine Stärke (34) von 20 cm +/-1 cm aufweist.

8. Straßendecke nach einem oder mehreren der vorherigen Ansprüche, wobei das Fundament (40) loser Zuschlagstoff ist und/oder die Stärke (44) des Fundaments (40) 15 cm +/-1 cm ist.

9. Straßendecke nach einem oder mehreren der vorherigen Ansprüche, wobei die Straßendecke (10) ferner einen oder mehrere undurchlässige Streifen (120) angrenzend an mindestens einen der porösen Streifen (20) umfasst, die undurchlässigen Streifen (120) umfassend:
- eine undurchlässige obere Schicht (110), die aus einer undurchdringlichen Asphaltbetonschicht (112) besteht;
- eine poröse Zwischenschicht (130), die unter der undurchlässigen oberen Schicht (110) positioniert ist und aus einer porösen Asphaltbetonschicht (132) besteht, umfassend:
- ein Gemisch aus Bitumen und Zuschlagstoff, der Zuschlagstoff umfassend einen Anteil von 65 % oder mehr, der nicht durch ein 14 mm Sieb hindurchgehen kann, und einen Anteil von 90 % oder mehr, der tatsächlich durch ein 32 mm Sieb hindurchgehen kann;
- eine Porosität in dem Bereich von 27 % bis und einschließlich 35 %; und
- eine Stärke in dem Bereich von 16 cm bis und einschließlich 23 cm; und
- ein wasserdurchlässiges, nicht gebundenes Fundament (140), das zwischen der porösen Zwischenschicht (130) und dem Boden (50) positioniert ist, damit Wasser in den Boden (50) sickern kann, das Fundament (140) umfassend eine Stärke in dem Bereich von 12 cm oder mehr.

10. Verfahren für den Bau einer Straßendecke nach einem oder mehreren der vorherigen Ansprüche, wobei das Verfahren die folgenden Schritte zum Anordnen des einen oder der mehreren porösen Streifen (20) der Straßendecke (10) umfasst:
- Anordnen des Fundaments (40);
- Anordnen der porösen oberen Schicht (30) auf der Oberseite des Fundaments (40).

11. Verfahren nach Anspruch 10, wobei die poröse obere Schicht (30) in zwei übereinander angeordneten Schichten angeordnet ist.

12. Verfahren nach Anspruch 11, wobei jede der zwei Schichten der porösen oberen Schicht (30) eine Stärke (34) von 9 cm oder mehr aufweist.

13. Verfahren nach einem oder mehreren der Ansprüche 10 - 12, wenn abhängig von einem oder mehreren der Ansprüche 9 - 15, wobei das Verfahren die folgenden Schritte zum Anordnen des einen oder der mehreren undurchlässigen Streifen (120) der Straßendecke (10) umfasst:
- Anordnen des Fundaments (140);
- Anordnen der porösen Zwischenschicht (130) auf der Oberseite des Fundaments (140);
- Anordnen der undurchlässigen oberen Schicht (110) auf der porösen Zwischenschicht (130).

14. Verfahren nach Anspruch 13, wobei:
- die poröse Zwischenschicht (130) in zwei übereinander liegenden Schichten angeordnet ist; und/oder
- die undurchlässige obere Schicht (110) in zwei übereinander liegenden Schichten angeordnet ist.

15. Verfahren nach Anspruch 14, wobei:
- jede der zwei Schichten der porösen Zwischenschicht (130) eine Stärke von mindestens 7 cm umfasst; und/oder
- jede der zwei Schichten der undurchlässigen oberen Schicht (110) eine Stärke von mindestens 1,5 cm umfasst.

## Revendications

1. Revêtement de route (10) comprenant une ou plusieurs bandes poreuses (20) comprenant :
- une couche supérieure poreuse (30) constituée d'une couche de béton bitumineux poreux (32) comprenant :
- un mélange de bitume et d'agrégat, l'agrégat comprenant une fraction de 65 % ou plus qui ne peut pas passer à travers un tamis de 14 mm et une fraction de 90 % ou plus qui peut effectivement passer à travers un tamis de 32 mm ;
- une porosité de l'ordre de 27 % à 35 % inclus ; et
- une épaisseur de l'ordre de 18 cm à 25 cm inclus ; et
- une fondation perméable à l'eau, non collée (40) positionnée entre la couche supérieure poreuse (30) et le sol (50), afin que l'eau s'infiltre dans le sol (50), la fondation (40) comprenant une épaisseur de l'ordre de 12 cm ou plus.

2. Revêtement de route selon la revendication 1, dans lequel la couche supérieure poreuse (30) comprend une capacité tampon de 280 1/m³ ou plus.

3. Revêtement de route selon la revendication 1 ou 2, dans lequel la couche supérieure poreuse (30) comprend une capacité tampon de 300 1/m³ ou plus.

4. Revêtement de route selon une ou plusieurs des revendications précédentes, dans lequel :
- l'agrégat de la couche de béton bitumineux poreux (32) comprend une fraction de 50 % ou plus qui ne peut pas passer à travers un tamis de 20 mm et une fraction de 90 % ou plus qui peut effectivement passer à travers un tamis de 32 mm; et
- une porosité de 28 % +/- 1 %.

5. Revêtement de route selon une ou plusieurs des revendications précédentes, dans lequel le bitume de la couche de béton bitumineux poreux (32) comprend un ou plusieurs des éléments suivants :
- bitume polymère ;
- bitume enrichi en fibres.

6. Revêtement de route selon une ou plusieurs des revendications précédentes, dans lequel la couche de béton bitumineux poreux (32) ne comprend ni ciment ni béton.

7. Revêtement de route selon une ou plusieurs des revendications précédentes, dans lequel la couche supérieure poreuse (30) comprend une épaisseur (34) de 20 cm +/- 1 cm.

8. Revêtement de route selon une ou plusieurs des revendications précédentes, dans lequel la fondation (40) est un agrégat meuble et / ou l'épaisseur (44) de la fondation (40) est de 15 cm +/- 1 cm.

9. Revêtement de route selon une ou plusieurs des revendications précédentes, dans lequel la surface de route (10) comprend en outre une ou plusieurs bandes imperméables (120) adjacentes à au moins l'une des bandes poreuses (20), les bandes imperméables (120) comprenant :
- une couche supérieure imperméable (110) constituée d'une couche de béton bitumineux imperméable (112) ;
- une couche intermédiaire poreuse (130), positionnée sous la couche supérieure imperméable (110), et constituée d'une couche de béton bitumineux poreux (132) comprenant :
- un mélange de bitume et d'agrégat, l'agrégat comprenant une fraction de 65 % ou plus qui ne peut pas passer à travers un tamis de 14 mm et une fraction de 90 % ou plus qui peut effectivement passer à travers un tamis de 32 mm ;
- une porosité de l'ordre de 27 % à 35 % inclus ; et
- une épaisseur de l'ordre de 16 cm à 23 cm inclus ; et
- une fondation perméable à l'eau, non collée (140) positionnée entre la couche intermédiaire poreuse (130) et le sol (50), afin que l'eau s'infiltre dans le sol (50), la fondation (140) comprenant une épaisseur de l'ordre de 12 cm ou plus.

10. Procédé de construction d'un revêtement de route selon une ou plusieurs des revendications précédentes, dans lequel le procédé comprend les étapes suivantes pour disposer l'une ou plusieurs bandes poreuses (20) du revêtement de route (10) :
- disposition de la fondation (40) ;
- disposition de la couche supérieure poreuse (30) sur le dessus de la fondation (40).

11. Procédé selon la revendication 10, dans lequel la couche supérieure poreuse (30) est disposée en deux couches disposées l'une sur l'autre.

12. Procédé selon la revendication 11, dans lequel chacune des deux couches de la couche supérieure poreuse (30) comprend une épaisseur (34) de 9 cm ou plus.

13. Procédé selon une ou plusieurs des revendications 10 à 12, lorsqu'il dépend d'une ou plusieurs des revendications 9 à 15, dans lequel le procédé comprend les étapes suivantes pour disposer l'une ou plusieurs bandes imperméables (120) du revêtement de route (10) :
- disposition de la fondation (140) ;
- disposition de la couche intermédiaire poreuse (130) au-dessus de la fondation (140) ;
- disposition de la couche supérieure imperméable (110) sur la couche intermédiaire poreuse (130).

14. Procédé selon la revendication 13, dans lequel :
- la couche intermédiaire poreuse (130) est disposée en deux couches situées l'une au-dessus de l'autre ; et / ou
- la couche supérieure imperméable (110) est disposée en deux couches situées l'une au-dessus de l'autre.

15. Procédé selon la revendication 14, dans lequel :
- chacune des deux couches de la couche intermédiaire poreuse (130) comprend une épaisseur d'au moins 7 cm ; et / ou
- chacune des deux couches de la couche supérieure imperméable (110) comprend une épaisseur d'au moins 1,5 cm.
